# EUROPEAN PATENT APPLICATION

(11) **EP 1 464 229 A1**
(43) Date of publication of application: **06.10.2004**
(21) Application number: 04251867.0
(22) Date of filing: 30.03.2004
(51) Int. Cl.: A23B 7/154, A23B 7/00, A01N 27/00

(54) **Technique for effectively treating an agricultural product with a 1-substituted-cyclopropene**

(30) Priority: 31.03.2003 JP 2003094402
(71) Applicant: ROHM AND HAAS COMPANY, Philadelphia, Pennsylvania 19106-2399 (US); Incorporated Administrative Agency, National Agriculture and Bio-Oriented Research Organization, Tsukuba-shi, Ibaraki 305-8517 (JP)
(72) Inventor: Kashimura,Yoshiki, Tsukuba-shi, Ibaraki-ken 305-003 (JP); Hayama, Hiroko, Tsukuba-shi, Ibaraki-ken 305-0032 (JP); Ito, Aikiko, Tsukuba-shi, Ibaraki-ken 305-0044 (JP)
(74) Representative: Kent, Venetia Katherine

(57) **Abstract**

A method of suppressing deterioration of the quality of an agricultural product, comprising a step of contact-treating an agricultural product under reduced pressure conditions with a cyclopropene compound having the following formula: 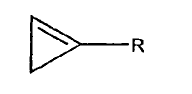 wherein R is hydrogen, or substituted or unsubstituted alkyl, alkenyl, alkynyl, cycloalkyl, cycloalkylalkyl, phenyl or naphthyl group; and substituents are independently halogen, alkoxy, or substituted or unsubstituted phenoxy. The method has the advantageous effect that deterioration of the quality of an agricultural product can be suppressed in a shorter period of time as compared with a time of contacting a cyclopropene compound and an agricultural product necessary under the normal pressure.

## Description

The present invention relates to a method of suppressing deterioration of the quality of an agricultural product using a cyclopropene compound.

In many agricultural products including fruit, vegetables and ornamental plants, various aging phenomena progress after harvesting. In a fruit such as, for example, an apple and a pear, softening of flesh, reduction in the content of acid, or discoloration of flesh progresses, in vegetables such as, for example, lettuce, development of russet spotting progresses, and in ornamental plants such as, for example, a carnation, withering of a petal, and flower falling progress, respectively. In many cases, since these aging phenomena are promoted by ethylene which is one kind of plant hormone, in order to suppress deterioration of the quality of an agricultural product due to aging in storage, distribution and selling process, various ethylene production suppressing agents and ethylene activity inhibiting agents have been developed.

Among these agents, 1-methylcyclopropene has the extremely strong effect of inhibiting ethylene activity, and the remarkable effect of suppressing deterioration of the quality is recognized in agricultural products including many fruits, vegetables and ornamental plants, such as, for example, an apple, a pear, a persimmon, a banana, an avocado, a lettuce, and a carnation. Conventionally, treatment for suppressing deterioration of the quality of an agricultural product with 1-methylcyclopropene has been performed by sealing an agricultural product to be treated, together with the air containing 1-methylcyclopropene in an air-tight storehouse for a predetermined period of time.

However, the effect of suppressing deterioration of the quality of an agricultural product with a cyclopropene compound, including 1-methylcyclopropene, depends on a treating time, and in order to obtain the practical effect of suppressing deterioration of the quality, a treating time of about 12 to 24 hours was necessary depending on the kind of agricultural product. For this reason, the quality deterioration suppressing treatment is typically performed, at minimum, by a unit of a shipment amount per day, so that in treatments in fruit sorting places, large scale treating facilities having the high air tightness were necessary. In addition, when treatment of about 12 to 24 hours is performed, there was a problem that agricultural products harvested during day cannot be forwarded on that day, and may be at earliest forwarded on the next day from harvesting in some cases.

The present inventors studied the effect of suppressing deterioration of the quality of an agricultural product with a cyclopropene compound under a variety of conditions. As a result, they have found that, by contacting an agricultural product with a cyclopropene compound under reduced pressure conditions, the effect of suppressing deterioration of the quality of an agricultural product is obtained in a remarkably shorter time as compared with the conventional treatment under a normal pressure, which resulted in completion of the present invention.

The present invention provides a method of suppressing deterioration of the quality of an agricultural product using a cyclopropene compound, which can suppress deterioration of the quality of the agricultural product in a shorter time as compared with a time of contacting an agricultural product with the cyclopropene compound necessary under a normal pressure, by contacting the agricultural product with the cyclopropene compound under reduced pressure conditions.

The present invention is a method of suppressing deterioration of the quality of an agricultural product, comprising a step of contact-treating the agricultural product under reduced pressure conditions with a cyclopropene compound having the following formula: 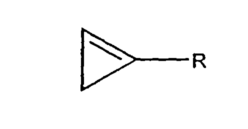 wherein, R is hydrogen, or substituted or unsubstituted alkyl, alkenyl, alkynyl, cycloalkyl, cycloalkylalkyl, phenyl or naphthyl group; and substituents are independently halogen, alkoxy, or substituted or unsubstituted phenoxy.

As used herein, the term "alkyl" means a straight or branched (C1-C20) alkyl group, and examples thereof include methyl, ethyl, n-propyl, isopropyl, 1-ethylpropyl, n-butyl, tert-butyl, isobutyl, 2,2-dimethylpropyl, pentyl, octyl and decyl. The terms "alkenyl" and "alkynyl" mean (C3-C20) alkenyl and (C3-C20) alkynyl groups and examples thereof include 2-propenyl, 2-butenyl, 3-butenyl, 2-methyl-2-propenyl, and 2-propynyl. The term "cycloalkylalkyl" means a (C1-C15) alkyl group substituted with a (C3-C6)cycloalkyl group, and example thereof include cyclopropylmethyl, cyclopropylethyl, cyclobutylmethyl and cyclopnetylethyl. The term "haloalkyl" refers to an alkyl group in which at least one hydrogen atom is substituted with halogen atom. The term "halogen" refers to fluorine, chlorine, bromine and iodine.

Preferably, R is (C1-C10)alkyl, more preferably, R is (C1-C8)alkyl, still more preferably, R is (C1-C4)alkyl, and most preferably, R is methyl.

As a cyclopropene compound in the present invention, a commercially available cyclopropene compound may be used, or a cyclopropene compound prepared by any publicly known method may be used. Examples of a process for preparing a cyclopropene compound include, but is not limited thereto, processes disclosed in U.S.P. Nos. 5,518,988 and 6,017,849.

In the present invention, an amount of a cyclopropene compound in contact treatment varies depending on the kind of an agricultural product, reduced pressure conditions, and the kind of cyclopropene compound, and may be an amount by which deterioration of the quality of an agricultural product can be suppressed, being not particularly limited. Preferably, the amount of a cyclopropene compound to be contacted with an agricultural product is 10 ppb (parts per billion) to 2000 ppb, more preferably 500 ppb to 1000 ppb as the cyclopropene concentration in the ambient atmosphere of an agricultural product in contact treatment.

"Under reduced pressure conditions" in the present invention refers to under a pressure lower than a normal pressure in which, when a cyclopropene compound and an agricultural product are contact-treated under the same conditions, the quality deterioration suppressing effect equivalent to or superior to the quality deterioration suppressing effects attained by contact-treatment under normal pressure conditions is attained in a shorter period of time than a contact-treating time under normal pressure conditions; and/or under a pressure lower than a normal pressure in which, when a cyclopropene compound and an agricultural product are contact-treated under the same conditions other than a pressure, the effect superior to the quality deterioration suppressing effect attained by contact-treatment under normal pressure conditions is obtained. Here, examples of aspects of the effect superior to the effect under normal pressure conditions include extending a period of time during which various aging phenomena due to ethylene can be prevented, and/or suppressing extents of various aging phenomena due to ethylene. Specifically, reduced pressure conditions vary depending on a cyclopropene compound and an amount of a cyclopropene compound to be used, a kind of an agricultural product and the like, preferably a pressure of 50 kPa or less, more preferably 35 kPa or less, still more preferably 25 kPa or less, and most preferably 12.5 kPa or less. A lower limit of a pressure under reduced pressure conditions may be in a range having no adverse influence on an agricultural product to which the reduced pressure condition is applied, and can be set in view of reduction of the evacuating ability of a vacuum pump used for evacuation. The lower limit of a pressure is preferably 10 kPa, more preferably 12.5 kPa, but not limited thereto.

In addition, as one aspect of the preset invention, an aspect of a combination of the above-mentioned contact treatment under a reduced pressure condition and contact treatment under a normal pressure is possible, in which contact treatment under a normal pressure can be performed after the above-mentioned contact treatment under reduced pressure conditions, or the above-mentioned contact treatment under reduced pressure condition can be performed after contact treatment under a normal pressure.

Contact treatment in the present invention may be any contact treatment as far as a cyclopropene compound can be contacted with an agricultural product under reduced pressure conditions, and an aspect thereof is not particularly limited. For example, there is an aspect in which an agricultural product is placed into an air-tight container, and the air in the container is removed by suction to an extent with a pump to obtain reduced pressure conditions, and then a cyclopropene compound is supplied in the container. In the present invention, since contact treatment is performed under reduced pressure conditions, contact treatment is preferably performed in an air-tight container. Here, a size and a shape of the container are not particularly limited, and may be as large as a storehouse. Further, such an aspect is also possible, in which an air-tight container is combined with a fruit sorting machine, and contact treatment of the present invention is performed during fruit-sorting. Additionally, contact treatment of the present invention may be performed at the same time upon reduced pressure pre-cooling and vacuum pre-cooling which have previously been performed in treatment of vegetables.

In the present invention, the agricultural product refers to any product which is derived from a plant, and the quality of which is deteriorated by ethylene. Preferably, the agricultural product includes fruit, vegetables, and ornamental plants. According to the method of the present invention, deterioration of the quality of an agricultural product due to ethylene, that is, softening of flesh, decrease in the content of an acid and discoloration of flesh in a fruit such as an apple, a pear and the like, development of russet spotting in a vegetable such as a lettuce, and withering and flower falling in ornamental plants can be suppressed. Also, in the present invention, it is desirable that an agricultural product is subjected to contact treatment in a short period of time after harvesting, and a time from harvesting to contact treatment is different depending on a crop and a variety, being not particularly limited. It is preferable that an agricultural product is subjected to contact treatment from immediately after harvesting to 7 days after harvesting, and it is more preferable that an agricultural product immediately after harvesting is subjected to contact treatment.

Examples of a fruit, quality deterioration of which can be suppressed by the present invention, include, but are not limited thereto, to fruits such as an apple (Malus(domestica), pears (Pyrus spp.), peaches (Prunus persica), an apricot (Prunus armeniaca), a plum (Prunus spp.) such as Japanese plum (Prunus salicina), a Japanese apricot (Prunus mume), a persimmon (Diospyros kaki), a kiwi (Actinidia chinesis), a blueberry (Vaccinium spp.), citrus fruits (Citrus spp.), a banana (Musa sapientum), a pinapple (Ananas comosus), a papaya (Carica papaya), a mango (Mangifera indica), an avocado (Persea Americana), a melon (Cucumis melo), a strawberry (Fragaria(ananassa) and a tomato (Lycopersicon esculentum).

Preferable fruits are an apple, a pear, a persimmon, a peach, a plum, a melon and a Japanese apricot.

Examples of a vegetable, quality deterioration of which can be suppressed by the method of the present invention, include, but is not limited thereto, leaf vegetables such as a lettuce (Lectuca sativa) a spinach (Spinacia oleracea), a cabbage (Brassica oleracea), a broccoli (Brassica oleracea), a cauliflower (Brassica oleracea), and an asparagus (Asparagus officinalis), root vegetables such as a potato (Solanum tuberosum) and a carrot (Daucus carota), fruit vegetables such as a cucumber (Cucumis sativus), a soybean (Glycine max), a lima bean (Phaseolus limensis), a pea (Pisum sativum), a cone (Zea mays), and a kidney bean (Phaseolus vulgaris), Welsh onions such as an onion (Allium cepa), and fragrant grasses such as a basil (Ocimum basilicum), an oregano (Origanum vulgare), and a dill (Anethum graveolens).

Examples of a flowers and ornamental plants, quality deterioration of which can be suppressed by the method of the present invention, include, but is not limited thereto, an azalea (Rhododendron spp.), a hydrangea (Hydrangea macrophylla), a hibiscus (Hibiscus rosa-sinensis), a snapdragon (Antirrhinum majus), a poinsettia (Euphorbia pulcherrima), a cactus (e.g. Cactaceae schlumbergera truncata), a begonia (Begonia spp.), a rose (Rosa(hybrida), a tulip (Tulipa gesneriana), a narcissus (Narcissus spp.), a petunia (Petunia(Hybrida), a carnation (Dianthus caryophyllus), a lily (Lilium spp.), a gladiolus (Gladiolus spp.), an alstroemeria (Alstroemeria sp.), an anemone (Anemone coronaria), a columbine (Aquilegia spp.), a Japanese angelica tree (Aralia elata), an aster (Callistephus chinensis), a bougainvillea (Bougainvillea glabra), a camellia (Camellia spp.), a bellflower (Campanula puncata), a cockscomb (Celosia argentea), a conifer (Chamaecyparis spp.), a chrysanthemum (Chrysanthemum morifolium), a clematis (Clematis spp.), a cyclamen (Cyclamen persicum), a freesia (Freesia refracta) and Orchidaceae orchids.

### Example 1

Using a Japanese pear (variety "Shinsei") fruit (6 fruits were used per group) as an agricultural product, the following experiment was performed.
1) A fruit and 1-methylcyclopropene (concentration 1 ppm (parts per million) in a chamber) were placed into a sealed chamber (volume 30L, same in the following Examples), and contact-treated for 1 hour or 16 hours under a normal pressure.
2) A fruit was placed into a sealed chamber, and a pressure in the chamber was reduced to 12.5 kPa. Subsequently, 1-methylcyclopropene was placed therein to the concentration in the chamber of 1 ppm, and contact-treated for 30 minutes or 1 hour under the reduced pressure (12.5 kPa).

The fruit which had been subjected to treatment of above-mentioned 1) or 2) was stored at 25 degrees C for 2 weeks, and hardness of flesh and pH of a fruit juice which is an index for the content of an acid were measured. In addition, browning of flesh and fruit core, which is an index for an extent of storage disorder was assessed by naked eyes. Contact treatment of the above-mentioned 1) or 2) was performed on a day of harvesting a fruit. In addition, also regarding a fruit undergoing no treatment of 1) or 2) (non-treatment), similar storage was performed, and the above-mentioned index was measured and assessed. Further, regarding non-treated fruit, the above-mentioned index before storage was also measured and assessed. The results are shown in Table 1. Different alpha characters in Table indicate that a significant difference was recognized at a risk rate of 5% (multiple range test of Newman-Keuls). In Tables showing the results of the following Examples 1 to 10, "1-MCP" denotes 1-methylcyclopropene.

**Table 1**

| Treatment | | Hardness of flesh (N) | pH of fruit juice | Presence or absence of browning |
|---|---|---|---|---|
| Before storage | | 21.46 | 4.87 | Absence |
| After storage | Non-treatment | 16.07a | 5.13 | Presence |
| | Normal pressure 1 hour 1-MCP treatment | 16.46a | 5.07 | Presence |
| | Normal pressure 16 hours 1-MCP treatment | 21.17b | 5.07 | Absence |
| | Reduced pressure 30 minutes 1-MCP treatment | 20.58b | 5.10 | Slight presence |
| | Reduce pressure 1 hour 1-MCP treatment | 20.97b | 4.97 | Absence |

In a Japanese pear (Shinsei) fruit, the quality deterioration suppressing effect of 1-methylcyclopropene was remarkably enhanced by treatment under the reduced pressure condition of 12.5 kPa. The effect of contact treatments for 1 hour and 30 minutes under the reduced pressure condition was approximately equal to that of contact treatment for 16 hours under the normal pressure condition.

### Example 2

Using a Japanese pear (variety "Shinsei") fruit (6 fruits were used per group) as an agricultural product, the following experiment was performed.
1) A fruit and 1-methylcyclopropene (concentration 1 ppm in a chamber) were placed into a sealed chamber, and contact-treated for 16 hours under a normal pressure.
2) A fruit was placed into a sealed chamber, and a pressure in the chamber was reduced to 12.5 kPa. Subsequently, 1-methylcyclopropene was placed therein to the concentration in the chamber of 1 ppm, and contact-treated for 1 minute or 10 minutes under the reduced pressure (12.5 kPa).

The fruit which had been subjected to treatment of the above-mentioned 1) or 2) was stored at 25 degrees C for 2 weeks, and hardness of flesh and pH of a fruit juice which is an index for the content of an acid were measured. In addition, browning of flesh and fruit core, which is an index for an extent of storage disorder was assessed by naked eyes. Contact treatment of the above-mentioned 1) or 2) was performed on a day of harvesting a fruit. In addition, also regarding a fruit undergoing no treatment of 1) or 2) (non-treatment), similar storage was performed, and the above-mentioned index was measured and assessed. Further, regarding non-treated fruit, the above-mentioned index before storage was also measured and assessed. The results are shown in Table 2. Different alpha characters in the same column after storage indicate that a significant difference was recognized at a risk rate of 5% (multiple range test of Newman-Keuls).

**Table 2**

| Treatment | | Hardness of flesh (N) | pH of fruit juice | Presence or absence of browning |
|---|---|---|---|---|
| Before storage | | 22.34 | 4.68 | Absence |
| After storage | Non-treatment | 15.39a | 5.13b | Presence |
| | Normal pressure 16 hours 1-MCP treatment | 22.74c | 4.92a | Absence |
| | Reduced pressure 1 minute 1-MCP treatment | 18.72b | 4.90a | Absence |
| | Reduced pressure 10 minutes 1-MCP treatment | 22.25c | 5.00ab | Absence |

In a Japanese pear (Shinsei) fruit, the quality deterioration suppressing effect of 1-methylcyclopropene was remarkably enhanced by treatment under the reduced pressure condition of 12.5 kPa. The effect of contact treatment for 10 minutes under the reduced pressure condition was approximately equal to that of contact treatment for 16 hours under the normal pressure condition. Also, in even contact treatment for 1 minute under the reduced pressure, the quality deterioration suppressing effect was recognized as compared with non-treatment.

### Example 3

Using a Japanese pear (variety "Kosui") fruit (6 fruits were used per group) as an agricultural product, the following experiment was performed.
1) A fruit and 1-methylcyclopropene (concentration 1 ppm in a chamber) were placed into a sealed chamber, and contact-treated for 16 hours under a normal pressure.
2) A fruit was placed into a sealed chamber, and a pressure in the chamber was reduced to 25.0 kPa. Subsequently, 1-methylcyclopropene was placed therein to the concentration in the chamber of 1 ppm, and contact-treated for 1 minute under the reduced pressure (25.0 kPa).

The fruit which had been subjected to treatment of the above-mentioned 1) or 2) was stored at 25 degrees C for 2 weeks, and hardness of flesh and pH of a fruit juice which is an index for the content of an acid were measured. In addition, an extent of storage disorder was assessed by tasting. Contact treatment of the above-mentioned 1) or 2) was performed on a day of harvesting a fruit. In addition, also regarding a fruit undergoing no treatment of 1) or 2) (non-treatment), similar storage was performed, and the above-mentioned index was measured and assessed. Further, regarding non-treated fruit, the above-mentioned index before storage was also measured and assessed. The results are shown in Table 3. Different alpha characters in Table 3 indicate that a significant difference was recognized at a risk rate of 5% (multiple range test of Newman-Keuls).

**Table 3**

| Treatment | | Hardness of flesh (N) | pH of fruit juice | Tasting |
|---|---|---|---|---|
| Before storage | | 24.89 | 5.30 | Better |
| After storage | Non-treatment | 19.11 | 6.02c | Worse |
| | Normal pressure 16 hours 1-MCP treatment | 22.44 | 5.22a | Better |
| | Reduced pressure 1 minute 1-MCP treatment | 21.36 | 5.57b | Better |

In a Japanese pear (Kosui) fruit, the quality deterioration suppressing effect of 1-methylcyclopropene was remarkably enhanced by treatment under the reduced pressure condition of 25.0 kPa. The effect of contact treatment for 1 minute under the reduced pressure condition was approximately equal to that of contact treatment for 16 hours under the normal pressure condition.

### Example 4

Using a Japanese pear (variety "Hosui") fruit (6 fruits were used per group) as an agricultural product, the following experiment was performed.
1) A fruit and 1-methylcyclopropene (concentration 1 ppm in a chamber) were placed into a sealed chamber, and contact-treated for 16 hours under a normal pressure.
2) A fruit was placed into a sealed chamber, and a pressure in the chamber was reduced to 25.0 kPa. Subsequently, 1-methylcyclopropene was placed therein to the concentration in the chamber of 1 ppm, and contact-treated for 1 minute under the reduced pressure (25.0 kPa).

The fruit which had been subjected to treatment of the above-mentioned 1) or 2) was stored at 25 degrees C for 2 weeks, and hardness of flesh and pH of a fruit juice which is an index for the content of an acid were measured. Contact treatment of the above-mentioned 1) or 2) was performed on a day of harvesting a fruit. In addition, also regarding a fruit undergoing no treatment of 1) or 2) (non-treatment), similar storage was performed, and the above-mentioned index was measured. Further, regarding non-treated fruit, the above-mentioned index before storage was also measured. The results are shown in Table 4. Different alpha characters in Table 4 indicate that a significant difference was recognized at a risk rate of 5% (multiple range test of Newman-Keuls).

**Table 4**

| Treatment | | Hardness of flesh (N) | pH of fruit juice |
|---|---|---|---|
| Before storage | | 19.11 | 4.62 |
| After storage | Non-treatment | 15.39 | 4.68b |
| | Normal pressure 16 hours 1-MCP treatment | 18.72 | 4.37a |
| | Reduced pressure 1 minute 1-MCP treatment | 17.25 | 4.43a |

In a Japanese pear (Hosui) fruit, the quality deterioration suppressing effect of 1-methylcyclopropene was remarkably enhanced by treatment under the reduced pressure condition of 25.0 kPa. The effect of contact treatment for 1 minute under the reduced pressure condition was approximately equal to that of contact treatment for 16 hours under the normal pressure condition.

### Example 5

Using an apple (variety "Sansa") fruit (6 fruits were used per group) as an agricultural product, the following experiment was performed.
1) A fruit and 1-methylcyclopropene (concentration 1 ppm in a chamber) were placed into a sealed chamber, and contact-treated for 12 hours under a normal pressure.
2) A fruit was placed into a sealed chamber, and a pressure in the chamber was reduced to 25.0 kPa. Subsequently, 1-methylcyclopropene was placed therein to the concentration in the chamber of 1 ppm, and contact-treated for 1 minute under the reduced pressure (25.0 kPa).

The fruit which had been subjected to treatment of the above-mentioned 1) or 2) was stored at 25 degrees C for 2 weeks, and hardness of flesh, pH of a fruit juice which is an index for the content of an acid, and the ethylene concentration in a fruit core were measured. Contact treatment of the above-mentioned 1) or 2) was performed on the following day of harvesting a fruit. In addition, also regarding a fruit undergoing no treatment of 1) or 2) (non-treatment), similar storage was performed, and the above-mentioned index was measured. Further, regarding non-treated fruit, the above-mentioned index before storage was also measured. The results are shown in Table 5. Different alpha characters in Table 4 indicate that a significant difference was recognized at a risk rate of 5% (multiple range test of Newman-Keuls).

**Table 5**

| Treatment | | Hardness of flesh (N) | pH of fruit juice | Ethylene concentration in fruit core (µL/L) |
|---|---|---|---|---|
| Before storage | | 62.72 | 3.62 | 1.46 |
| After storage | Non-treatment | 35.08a | 3.50b | 27.54b |
| | Normal pressure 12 hours 1-MCP treatment | 61.05b | 3.38a | 1.86a |
| | Reduced pressure 1 minute 1-MCP treatment | 63.21b | 3.40a | 0.97a |

In an apple (Sansa) fruit, the quality deterioration suppressing effect of 1-methylcyclopropene was remarkably enhanced by treatment under the reduced pressure condition of 25.0 kPa. The effect of contact treatment for 1 minute under the reduced pressure condition was approximately equal to that of contact treatment for 12 hours under the normal pressure condition.

### Example 6

Using an apple (variety "Orin") fruit (6 fruits were used per group) as an agricultural product, the following experiment was performed.
1) A fruit and 1-methylcyclopropene (concentration 1 ppm in a chamber) were placed into a sealed chamber, and contact-treated for 16 hours under a normal pressure.
2) A fruit was placed into a sealed chamber, and a pressure in the chamber was reduced to 25.0 kPa. Subsequently, 1-methylcyclopropene was placed therein to the concentration in the chamber of 1 ppm, and contact-treated for 1 hour under the reduced pressure (25.0 kPa).
3) A fruit was placed into a sealed chamber. Subsequently, a pressure in the chamber was reduced to 25.0 kPa, and the fruit was kept in the chamber for 1 hour under the reduced pressure (25.0 kPa).

The fruit which had been subjected to treatment of the above-mentioned 1), 2) or 3) was stored at 25 degrees C for 3 weeks, and hardness of flesh and mealy of flesh were measured. In addition, treatments of the above-mentioned 1), 2) and 3) were performed regarding fruits which had been stored for about 1 month after harvesting of fruit. In addition, also regarding a fruit undergoing no treatment of 1), 2) or 3) (non-treatment), similar storage was performed, and the above-mentioned index was measured. Further, regarding non-treated fruit, the above-mentioned index before storage was also measured. The results are shown in Table 6. Different alpha characters in Table 6 indicate that a significant difference was recognized at a risk rate of 5% (multiple range test of Newman-Keuls).

**Table 6**

| Treatment | | Hardness of flesh (N) | Mealy of flesh |
|---|---|---|---|
| Before storage | | 52.72 | Absence |
| After storage | Non-treatment | 41.16ab | Remarkable |
| | Normal pressure 16 hours 1-MCP treatment | 42.06ab | Slight |
| | Reduce pressure 1 hour 1-MCP treatment | 44.02b | Slight |
| | Reduced pressure 1 hour treatment without use of 1-MCP | 37.73a | Remarkable |

In an apple (Orin) fruit, the quality deterioration suppressing effect of 1-methylcyclopropene was remarkably enhanced by treatment under the reduced pressure condition of 25.0 kPa. The effect of contact treatment for 1 hour under the reduced pressure condition was approximately equal to that of contact treatment for 16 hours under the normal pressure condition.

No quality deterioration suppressing effect was recognized in a group undergoing only reduced pressure.

### Example 7

Using a peach (variety "Yuzora") fruit (6 fruits were used per group) as an agricultural product, the following experiment was performed.
1) A fruit and 1-methylcyclopropene (concentration 1 ppm in a chamber) were placed into a sealed chamber, and contact-treated for 24 hours under a normal pressure.
2) A fruit was placed into a sealed chamber, and a pressure in the chamber was reduced to 25.0 kPa. Subsequently, 1-methylcyclopropene was placed therein to the concentration in the chamber of 1 ppm, and contact-treated for 1 minute under the reduced pressure (25.0 kPa).

The fruit which had been subjected to treatment of the above-mentioned 1) or 2) was stored at 25 degrees C for 9 days, and hardness of flesh and was measured. In addition, contact treatment of the above-mentioned 1) or 2) was performed on the next day from harvesting of fruit. In addition, also regarding a fruit undergoing no treatment of 1) or 2) (non-treatment), similar storage was performed, and the above-mentioned index was measured. Further, regarding non-treated fruit, the above-mentioned index before storage was also measured. The results are shown in Table 7.

**Table 7**

| Treatment | | Hardness of flesh (N) |
|---|---|---|
| Before storage | | 32.93 |
| After storage | Non-treatment | 3.37 |
| | Normal pressure 24 hours 1-MCP treatment | 4.38 |
| | Reduced pressure 1 minute 1-MCP treatment | 4.24 |

In a peach (Yuzora) fruit, the quality deterioration suppressing effect of 1-methylcyclopropene was remarkably enhanced by treatment under the reduced pressure condition of 25.0 kPa. The effect of contact treatment of 1 minute under the reduced pressure condition was approximately equal to that of contact treatment for 24 hours under the normal pressure condition.

### Example 8

Using a peach (variety "Akatsuki") fruit (6 fruits were used per group) as an agricultural product, the following experiment was performed.
1) A fruit and 1-methylcyclopropene (concentration in a chamber 1 ppm) were placed into a sealed chamber, and contact-treated for 12 hours under a normal pressure.
2) A fruit was placed into a sealed chamber, and a pressure in the chamber was reduced to 25.0 kPa. Subsequently, 1-methylcyclopropene was placed therein to the concentration in the chamber of 1 ppm, and contact-treated for 1 minute under the reduced pressure (25.0 kPa). Then, the pressure was returned to a normal pressure, and contact treatment was carried out for 12 hours while the concentration of 1-methylcyclopropene in the chamber was maintained at 1 ppm.

The fruit which had been subjected to treatment of the above-mentioned 1) or 2) was stored at 25 degrees C for 5 days, and hardness of flesh was measured. In addition, contact treatment of the above-mentioned 1) or 2) was performed on a day for harvesting of a fruit. In addition, also regarding a fruit undergoing no treatment of 1) or 2) (non-treatment), similar storage was performed, and the above-mentioned index was measured. Further, regarding a non-treated fruit, the above-mentioned index before storage was also measured. The results are shown in Table 8. Different alpha characters in Table 8 indicate that a significant difference was recognized at a risk rate of 5% (multiple range test of Newman-Keuls).

**Table 8**

| Treatment | | Hardness of flesh (N) |
|---|---|---|
| Before storage | | 30.89 |
| After storage | Non-treatment | 3.24a |
| | Normal pressure 12 hours 1-MCP treatment | 2.84a |
| | Normal pressure 12 hours 1-MCP treatment after reduced pressure 1 minute 1-MCP treatment | 6.18b |

In a peach (Akatsuki) fruit, the quality deterioration suppressing effect of 1-methylcyclopropene was remarkably enhanced by treatment under the reduced pressure condition of 25.0 kPa. By combining contact treatment for 1 minute under the reduced pressure condition with contact treatment for 12 hours under the normal pressure condition, the remarkably superior effect was recognized as compared with the case of only contact treatment for 12 hours under the normal pressure condition.

### Example 9

Using a peach (variety "Akatsuki") fruit (6 fruits were used per group) as an agricultural product, the following experiment was performed.
1) A fruit was placed into a sealed chamber, and a pressure in the chamber was reduced to 25.0 kPa. Subsequently, 1-methylcyclopropene was placed therein to the concentration in the chamber of 1 ppm, and contact-treated for 1 minute under the reduced pressure (25.0 kPa). Then, the pressure was returned to a normal pressure, and contact treatment was carried out for 12 hours while the concentration of 1-methylcyclopropene in the chamber was maintained at 1 ppm.
2) A fruit was placed into a sealed chamber, and a pressure in the chamber was reduced to 25.0 kPa. Subsequently, 1-methylcyclopropene was placed therein to the concentration in the chamber of 1 ppm, and contact-treated for 12 hours under the reduced pressure (25.0 kPa).

The fruit which had been subjected to treatment of the above-mentioned 1) or 2) was stored at 25 degrees C for 5 days, and hardness of flesh was measured. Note that contact treatment of the above-mentioned 1) or 2) was performed on a next day from harvesting of a fruit. In addition, also regarding a fruit undergoing no treatment of 1) or 2) (non-treatment), similar storage was performed, and the above-mentioned index was measured. Further, regarding a non-treated fruit, the above-mentioned index before storage was also measured. The results are shown in Table 9. Different alpha characters in Table 9 indicate that a significant difference was recognized at a risk rate of 5% (multiple range test of Newman-Keuls).

**Table 9**

| Treatment | | Hardness of flesh (N) |
|---|---|---|
| Before storage | | 37.84 |
| After storage | Normal pressure 12 hours 1-MCP treatment after reduced pressure 1 minute 1-MCP treatment | 4.39a |
| | Reduced pressure 12 hours 1-MCP treatment | 7.11b |

In a peach (Akatsuki) fruit, the quality deterioration suppressing effect of 1-methylcyclopropene was remarkably enhanced by increasing a time of contact-treatment under the reduced pressure condition.

### Example 10

Using a cut flower (5 ornamental plants were used per group) of a carnation (variety "Rosybabara") as an agricultural product, the following experiment was performed.
1) An ornamental plant and 1-methylcyclopropene (concentration in a chamber 1 ppm) were placed in a sealed chamber, and contact-treated for 1 hour or 12 hours under a normal pressure.
2) An ornamental plant was placed into a sealed chamber, and a pressure in the chamber was reduced to 12.5 kPa. Subsequently, 1-methylcyclopropene was placed therein to the concentration in the chamber of 1 ppm, and contact-treated for 1 minute under the reduced pressure (12.5 kPa).
3) An ornamental plant was placed in a sealed chamber. Subsequently, a pressure in the chamber was reduced to 12.5 kPa and the ornamental plant was kept in the chamber under the reduced pressure for 1 minute.

An ornamental plant which had been subjected to treatment of the above-mentioned 1), 2) or 3) was stored at 20 degrees C for 14days, and an extent of withering of an ornamental plant was assessed by naked eyes. Assessment criteria were 4 stages; 0 = healthy, 1 = slight withering, 2 = intermediate withering, 4 = considerable withering, and an average of assessment in 5 ornamental plants was calculated. Note that the treatment above-mentioned 1), 2) or 3) was performed on a day of harvesting an ornamental plant. In addition, also regarding an ornamental plant undergoing no treatment of 1), 2) or 3) (non-treatment), the similar storage was performed, and the above-mentioned index was measured. An average of an extent of withering is shown in Table 10.

**Table 10**

| Treatment | | Extent of withering |
|---|---|---|
| After storage | Non-treatment | 1.2 |
| | Reduced pressure 1 minute treatment without use of 1-MCP | 1.6 |
| | Normal pressure 1 hour 1-MCP treatment | 0.8 |
| | Normal pressure 24 hours 1-MCP treatment | 0.4 |
| | Reduced pressure 1 minute 1-MCP treatment | 0.4 |

Also in a carnation ornamental plant, the quality deterioration suppressing effect of 1 -methylcyclopropene is remarkably enhanced by treatment under the reduced pressure condition of 12.5 kPa. The effect of contact treatment for 1 minute under the reduced pressure condition was superior to that of contact treatment for 1 hour under the normal pressure condition, and approximately equal to that of contact treatment for 24 hours under the normal pressure condition.

As explained above, the present invention has the advantageous effect that, in a method of suppressing deterioration of the quality of an agricultural product using a cyclopropene compound, by contacting a cyclopropene compound with an agricultural product under reduced pressure conditions, deterioration of the quality of an agricultural product can be suppressed in a shorter period of time as compared with a time of contacting a cyclopropene compound and an agricultural product necessary under a normal pressure.

In addition, the present invention has the advantageous effect that, in a method of suppressing deterioration of the quality of an agricultural product using a cyclopropene compound, by contacting a cyclopropene compound and an agricultural product under reduced pressure conditions, the more superior quality deterioration suppressing effect can be attained as compared with the effect of suppressing deterioration of the quality of an agricultural product attained by contact treatment under normal pressure conditions when the contact times are the same.

## Claims

1. A method of suppressing the deterioration of the quality of an agricultural product, comprising a step of contact-treating the agricultural product under reduced pressure conditions with a cyclopropene compound having the following formula: 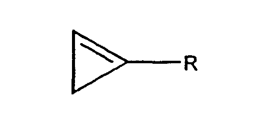 wherein, R is hydrogen, or substituted or unsubstituted alkyl, alkenyl, alkynyl, cycloalkyl, cycloalkylalkyl, phenyl or naphthyl group; and substituents are independently halogen, alkoxy, or substituted or unsubstituted phenoxy.

2. The method of suppressing deterioration of the quality of an agricultural product according to claim 1, wherein R of the cyclopropene compound is (C1-C8)alkyl.

3. The method of suppressing deterioration of the quality of an agricultural product according to claim 1, wherein the agricultural product is selected from the group consisting of fruit, vegetables, and ornamental plants.

4. The method of suppressing deterioration of the quality of an agricultural product according to claim 1, wherein the agricultural product is a fruit of a plant selected from the group consisting of an apple, a pear, a persimmon, a peach, a plum, a melon, and a Japanese apricot.

5. The method of suppressing deterioration of the quality of an agricultural product according to claim 1, wherein the reduced pressure condition is a pressure of 50 kPa or less.
